# EUROPEAN PATENT APPLICATION

(11) **EP 4 741 203 A1**
(43) Date of publication of application: **13.05.2026**
(21) Application number: 24211728.1
(22) Date of filing: 08.11.2024
(51) Int. Cl.: B60K 35/22, B60K 35/53

(54) **POSITIONING MECHANISM AND METHODS FOR DEPLOYING AND/OR RETRACTING A DISPLAY UNIT, SLIDING MEMBER, AND VEHICLE**

(71) Applicant: Bugatti Rimac LLC, Sveta Nedjelja (HR)
(72) Inventor: Drazic, Zlatko, Sveta Nedjelja (HR)
(74) Representative: Sonnenberg Harrison Partnerschaft mbB

(57) **Abstract**

A positioning mechanism for deploying and/or retracting a display unit is described. The positioning mechanism comprises at least one first sliding member, at least one first sliding rail being at least partially curved and configured to support the at least one first sliding member, and a sliding unit configured to be connected to the at least one first sliding member for moving along the at least one first sliding rail. The sliding unit comprises the display unit. The positioning mechanism further comprises an assist mechanism for guiding and/or stabilizing the sliding unit and a belt drive assembly configured to provide a drive belt for driving the sliding unit. The drive belt is arranged along a predefined driving trajectory, and the predefined driving trajectory is at least partially determined by the at least one first sliding rail.

## Description

### FIELD OF THE INVENTION

The present invention relates to a positioning mechanism and methods for deploying and/or retracting a display unit. The present invention also relates to a sliding member for such a positioning mechanism. The present invention further relates to a vehicle comprising such a positioning mechanism.

### BACKGROUND OF THE INVENTION

Advancements in communication technology and consumer electronics enable the provision of digital information in a vehicle. Such information usually comprises visual and/or aural information which may be presented to one or more users. Modern screens are widely used for providing all kinds of visual information and contents. As a consequence, there is an interest in integrating one or more screens into the vehicle.

The information provided by such screens may serve different purposes and fulfill various functions in the vehicle, which is why the availability and provision of the screens in the vehicle and, more specifically, in the vehicle interior is of interest. Available screens may then be used for a large variety of applications.

The screens may provide information to the user about the vehicle itself. The information may be required to adequately operate the vehicle, such as information about travelling speed, state of charge/fuel level, energy/fuel consumption, or motor heat. The information may also contain facts about maintenance requirements or safety alerts about car components.

The screens may also provide information to the user for other purposes than operating the vehicle. The provided information may assist and/or entertain the user while travelling, such as a navigation system, establishing a phone connection, or displaying multimedia content.

The challenge in the field of vehicle construction is the provision of the screens and the integration into the vehicle body. Each display requires a suitable support mechanism to ensure that the requirements resulting from vehicle construction, design guidelines, and user experience are met.

A challenge arises from the desired interior design of vehicles, which often prefers a rather clean/minimalistic design approach and aims at keeping visible screens to a minimum. Therefore, support mechanisms are usually favored which are able to hold the screens in different positions. A screen may be stored in a predetermined compartment and only appears on demand of the user.

However, current support mechanisms are often bulky and require much space, affecting their integration into the vehicle. In addition, the support mechanisms are often individually designed for one particular location in the vehicle, which makes a transfer to other vehicle positions and/or different screens difficult. Hence, the use of available support mechanisms is often not advantageous.

The prior art shows an absence of a positioning mechanism in vehicles capable of providing a display unit to the user on demand, which may be positioned at different locations of the vehicle interior, suitable for different types and sizes of display units, having a compact assembly, and easy to manufacture at low cost.

Against this background, it is an objective of the present invention to provide an improved positioning mechanism and methods for deploying and/or retracting a display unit, a sliding member for such positioning mechanism, and a vehicle comprising the improved positioning mechanism.

### SUMMARY OF THE INVENTION

This objective is achieved by a positioning mechanism having the features of claim 1. This objective is further achieved by a method having the features of claim 13. This objective is further achieved by a further method having the features of claim 14. This objective is further achieved by a sliding member having the features of claim 16.

A positioning mechanism is disclosed in the present document. In accordance with a first aspect, the positioning mechanism for deploying and/or retracting a display unit comprises at least one first sliding member, at least one first sliding rail, a sliding unit, an assist mechanism, and a belt drive assembly. The at least one first sliding rail is at least partially curved and configured to support the at least one first sliding member. The sliding unit is configured to be connected to the at least one first sliding member for moving along the at least one first sliding rail, wherein the sliding unit comprises the display unit. The assist mechanism is configured to guide and/or stabilize the sliding unit. The belt drive assembly is configured to provide a drive belt for driving the sliding unit. The drive belt is arranged along a predefined driving trajectory, and the predefined driving trajectory is at least partially determined by the at least one first sliding rail.

The present invention therefore relates to the positioning mechanism for deploying and/or retracting the display unit. The disclosed positioning mechanism is able to provide the display unit in many different positions in a compact and reliable manner while enabling precise motion of the display unit. The positioning mechanism also enables the provision of the display unit in a vehicle on demand of a user. In addition, permanently installed displays in the interior of the vehicle may be avoided due to the disclosed positioning mechanism contributing to a high degree of freedom regarding the design of the vehicle interior and, more specifically, the vehicle trim. In other words, the positioning mechanism enables "hiding" of the display unit from visible surfaces of the vehicle interior and allows the display unit to be deployed when necessary and/or desired by the user.

The term "positioning mechanism" refers to a system enabling provision of an object in two or more desired positions. Each position comprises a desired location and a desired orientation. The object is preferably the display unit or a display panel. Thus, the positioning mechanism may also refer to a display or panel holder. The positioning mechanism may be configured for detachable removing the display. In another aspect, the positioning mechanism is connected to at least a part of the vehicle such that the display unit may be deployed from a dashboard of the vehicle. In yet another aspect, the positioning mechanism is connected to at least a part of the vehicle such that the display unit may be provided between two front seats of the vehicle so that the positioning mechanism may deploy between the front passengers of the vehicle. Alternatively or in addition, the positioning mechanism may deploy towards the rear passenger of the vehicle._Alternatively or in addition, the positioning mechanism may at least partially deploy so that the display unit may show a feed of a rear-view camera of the vehicle.

The term "display unit" refers to a device for providing information to the user. The display unit may comprise any type of screen for providing visual information to the user, such as, but not limited to, a flat screen, a tablet, or a smartphone. In another aspect, the display unit may also be equipped with speakers to additionally provide aural information. In a further aspect, the display unit may be able to (additionally) provide haptic/vibrational information. In a yet further aspect, the display unit may comprise an additional panel or a dashboard for interaction with the user.

The term "first sliding member" refers to a component which is in contact with another component. The first sliding member moves along a path on/at the other component and is subject to sliding friction.

The term "first sliding rail" refers to a component that enables moving of another component along itself. The shape of the first sliding rail provides for a path along which the other component can move. The path determines the motion of the other component and, thus, the positions of the other component. In another aspect, the positioning mechanism preferably comprises two of the at least one first sliding member. Preferably, each of the at least one first sliding rail comprises one first sliding member. In a further aspect, each of the at least one first sliding rail comprises two first sliding members.

The term "sliding unit" refers to an assembly of components which moves along a path determined by the first sliding rail.

The term "assist mechanism" refers to a system contributing to guidance and/or stabilization of another component. The other component moves along a path determined by the first sliding rail and is assisted during the motion by the assist mechanism. In another aspect, the assist mechanism preferably comprises two of at least one second sliding rail.

The term "belt drive assembly" refers to an arrangement of components providing a driving force for driving a different component via one or more force transmission element. One force transmission element is preferably the drive belt for driving the sliding unit.

The term "drive belt" refers to a flexible loop connecting two or more components and transferring power to other devices. In another aspect, the drive belt is a flexible drive belt.

The term "predefined driving trajectory" refers to a path along which the drive belt may provide force to the sliding unit.

In accordance with another aspect, the at least one first sliding rail has at least one curved portion configured such that the sliding unit is moved at least partly non-linearly. The predefined driving trajectory corresponds at least partially to the at least one curved portion. Preferably, the predefined driving trajectory corresponds at least partially to a sliding surface of the at least one first sliding rail provided at the at least one curved portion.

Moving the sliding unit in a non-linearly manner results in a change of the orientation of the display unit. The possibility of changing the orientation of the display unit enables a higher degree of freedom regarding the provision of the display unit in terms of a desired viewing position and/or a desired storing position of the display unit. In addition, since the predefined driving trajectory corresponds at least partially to the at least one curved portion it is possible to provide driving force to the sliding unit even in curved portions of the of the at least one first sliding rail resulting in a smooth movement. Further, when the predefined driving trajectory corresponds at least partially to the sliding surface of the at least one first sliding rail provided at the at least one curved portion, the constructional effort may be reduced.

In accordance with another aspect, the at least one first sliding rail further has at least one straight portion configured such that the sliding unit is moved at least partly linearly along the at least one first sliding rail.

Moving the sliding unit linearly enables changing a location of the display unit. Changing the location of the display unit enables a higher degree of freedom regarding the provision of the display unit, since the at least one straight portion may be adapted with respect to the desired viewing position of the user. Changing the location of the display unit also facilitates the integration of the positioning mechanism into the vehicle trim and the vehicle, respectively, since the at least one straight portion may also be adapted with respect to the storing position of the display unit.

In accordance with another aspect, the belt drive assembly further comprises a belt guiding structure configured to guide the drive belt at least partially along the predefined driving trajectory. Preferably, the belt guiding structure provides a guiding surface to guide the drive belt and/or has an offset to the at least one first sliding rail.

The belt guiding structure enables guidance of the drive belt along the predefined driving trajectory in a defined and reliable manner. In particular, the belt guiding structure enables improved guidance of the drive belt along curved portions. Using the guiding surface of the belt guiding structure as well as arranging the belt guiding structure with the offset to the at least one first sliding rail contributes to a compact assembly.

The term "belt guiding structure" refers to a component ensuring proper arrangement and alignment of the drive belt.

In accordance with another aspect, the belt drive assembly further comprises at least one clamp member configured to be movably arranged at the belt guiding structure and to be connected to the drive belt and the sliding unit.

The at least one clamp member enables transmission of the driving force provided by the driving belt to the sliding unit at low constructional efforts.

The term "clamp member" refers to a component connecting the drive belt and the sliding unit and acting as a force transmission element.

In accordance with another aspect, the belt drive assembly further comprises at least one of a first motor, a first gear box, and at least one pulley. Preferably, the first gear box comprises a worm gear transmission, and more preferably the belt drive assembly further comprises a tension adjustment unit.

Using the first motor enables controlling the movement of the sliding unit without manual assistance, increasing the comfort of the user. Using the first gear box enables adjustment of output parameters of the first motor to driving requirements of the drive belt and the sliding unit, respectively, providing a higher constructional flexibility and effectiveness. The advantage of providing a belt drive compared to other driving options (for example, rack and pinion) is that the belt drive may provide a higher granularity of motion and a smoother motion, in particular, for moving the display unit. The worm gear transmission, as one example of the first gear box, constitutes a standard component which is compact. Also, another advantage of providing worm gear is its ability to allow locking the sliding unit in a plurality of, preferably in all, positions without falling or sliding back. Using a tension adjustment unit may further improve the handling, guidance, and performance of the drive belt, since the belt tension may be kept at a predetermined tension value, reducing the risk of failure of the belt drive assembly over time. The tension adjustment unit thus enables re-adjusting the tension of the drive belt, for example because of elongation occurring over time, increasing the overall life span of the positioning mechanism.

The term "first motor" refers to a device that converts electrical energy into mechanical motion for providing power to other components and/or devices.

In accordance with another aspect, the at least one first sliding rail has a rail cross-section configured to at least partially accommodate the at least one first sliding member. Preferably, the cross-section exhibits a C-shape.

Accommodating the at least one first sliding member provides protection and enables guidance. Using a C-shaped cross-section of the at least one first sliding rail especially improves guiding properties and results in a more stable movement of the sliding unit.

In accordance with another aspect, the positioning mechanism comprises two of the at least one first sliding rail, preferably being provided in an opposing manner on the positioning mechanism.

Using two of the at least one first sliding rail further improves the guiding properties and results in an even more stable movement of the sliding unit. Providing the two first sliding rails in an opposing manner enables a compact assembly while also enabling stable movements of the sliding unit.

In accordance with another aspect, the sliding unit comprises a support structure, wherein the display unit is rigidly and/or pivotably attached to the support structure.

The support structure enables a secure and compact integration of the display unit into the sliding unit. Pivoting the display unit at the support structure enables additionally adjusting the orientation of the display unit. For example, this allows the user to adjust the orientation according to the desired viewing position, i.e., a preferred display orientation which increases the flexibility and applicability of the positioning mechanism.

The term "support structure" refers to a one or more components for holding the weight and load of other objects, devices, systems. The one or more components of the support structure may be formed integrally as a single component or may be assembled via fixation means.

In accordance with another aspect, the support structure is configured to provide a display rotation mechanism for pivoting the display unit. Preferably, the display rotation mechanism comprises at least one of a second motor, a second gear box, at least one wheel, and at least one cable. More preferably, the second motor is a DC motor and/or the second gear box comprises a planetary gear.

Using the display rotation mechanism provided at the support structure enables a compact assembly regarding the implementation of a pivoting function for the display unit. Using the second motor enables controlling the motion of the display unit without manual assistance, increasing the comfort of the user. Using the second gear box enables adjustment of output parameters of the second motor to driving requirements of the at least one cable and the display unit, respectively, providing a higher constructional flexibility and effectiveness. Using the at least one wheel enables easy handling and reliable guidance of the at least one cable. Furthermore, it allows fulfilling predefined packaging space requirements. Using the DC motor, as one example of the second motor, enables electronic control of the pivoting. The planetary gear, as one example of the second gear box, constitutes a standard component which is cheap and compact.

The term "display rotation mechanism" refers to a system that enables pivoting of the display unit.

The term "second motor" refers to a device that converts electrical energy into mechanical motion for providing power to other components and/or devices.

In accordance with another aspect, the positioning mechanism further comprises a housing structure for supporting and/or accommodating the sliding unit, an opening provided at the housing structure and configured such that the sliding unit at least partially moves through the opening, a lid configured to at least partially cover the opening, and a lid positioning mechanism configured to move the lid.

The housing structure enables a secure and simple integration of the positioning mechanism into the vehicle trim and the vehicle, respectively. The housing structure also protects the accommodated components, such as the sliding unit. The opening enables a connection between an interior space of the housing structure to an exterior space located outside the housing structure and the positioning mechanism, respectively. The lid closes the housing structure in the retracted position of the display unit and, thus, prevents any unwanted objects such as, but not limited to, particles or dirt from falling into the housing structure. The lid hence reduces cleaning efforts but also functions as a design element regarding the visible surface of the vehicle trim in the retracted position of the display unit. Using the lid positioning mechanism enables moving the lid dependent on the position of the sliding unit.

The term "housing structure" refers to one or more components which provide structural support to other elements and/or devices, and enclose an interior space, and enable environmental shielding. The one or more components of the housing structure may be formed integrally as a single component or may be assembled via fixation means.

The term "lid positioning mechanism" refers to a system that controls the position of the lid dependent on the position of the sliding unit while ensuring proper alignment.

In accordance with another aspect, the lid positioning mechanism is mechanically synchronized with the sliding unit via a mechanical assembly, wherein the mechanical assembly preferably comprises an actuation pin, at least one articulated arm unit, and at least one spring element.

The mechanical assembly for synchronizing the lid with the sliding unit ensures automated opening and closing, respectively, of the lid when the sliding unit moves from the retracted position into the deployed position and vice versa. A manual operation of the lid is thus avoided, which increases the comfort of the user. Using the actuation pin, the at least one articulated arm unit, and the at least one spring element enables a simple, reliable, compact, and cost-aware implementation of the mechanical assembly.

The term "mechanical assembly" refers to a system of mechanical components for controlling the positioning of the lid. The term "actuation pin" refers to a rod-like element which is adapted to receive a force. The term "articulated arm unit" refers to two or more components which are successionally connected via one or more joints.

In accordance with another aspect, the at least one first sliding rail and the assist mechanism are configured to provide the sliding unit in a predefined retracted position and/or in a predefined deployed position.

The predefined retracted position ensures a position suitable for long-time storage of the display unit and the sliding unit, respectively, in the vehicle. The predefined deployed position enables the provision of the display unit in the desired viewing position which is perceived as (most) comfortable by the user.

In accordance with another aspect, the assist mechanism comprises at least one second sliding rail being at least partially curved and configured to support at least one second sliding member connected to the sliding unit, wherein the at least one second sliding rail has an offset to the at least one first sliding rail. Preferably, the at least one second sliding rail is shaped and/or guided different from the at least one first sliding rail.

Using the at least one second sliding rail supporting the at least one second sliding member enables a defined and stable motion of the sliding unit. Arranging the at least one second sliding rail with the offset to the at least one first sliding rail contributes to a compact assembly and simple manufacturing. The at least one second sliding rail is shaped and/or guided different from the at least one first sliding rail enabling a higher flexibility regarding the desired position of the display unit, constructional freedom, and space requirements.

In accordance with another aspect, the assist mechanism comprises two of the at least one second sliding rail, preferably being provided in an opposing manner on the positioning mechanism.

Using two of the at least one second sliding rails further improves the guiding properties and results in an even more stable movement of the sliding unit. Providing the two second sliding rails in an opposing manner enables a compact assembly while enabling stable movements of the sliding unit.

A method for deploying and/or retracting a display unit is disclosed in the present document. In accordance with another aspect, the method comprises the following steps: moving a sliding unit along at least one first sliding rail in a first moving direction from a predefined retracted position or a first predefined deployed position to a second predefined deployed position, pivoting the display unit from a non-pivoted orientation to a pivoted orientation or from the pivoted orientation to the non-pivoted orientation, and moving the sliding unit along the at least one first sliding rail in a second moving direction from the second predefined deployed position to the first predefined deployed position or the predefined retracted position. The first predefined deployed position is different from the second predefined deployed position. The first moving direction is different from the second moving direction. The pivoting of the display unit is non-sequential to the moving of the sliding unit along the at least one first sliding rail in the first moving direction from the predefined retracted position or the first predefined deployed position to the second predefined deployed position and/or the moving of the sliding unit along the at least one first sliding rail in the second moving direction from the second predefined deployed position to the first predefined deployed position or the predefined retracted position of the sliding unit.

The method reduces the necessary amount of time to deploy or retract the display unit due to the non-sequential manner. "Non-sequential" refers to deploying or retracting or pivoting in a manner that does not occur in a specific order or follows a logical progression or is executed in a predetermined order. In other words, different types of motion applied to the display unit may overlap, for example, but not limited to, pivoting the display unit while moving the sliding unit. Pivoting the display unit while moving the sliding unit also creates an aesthetic effect appreciated by the user.

A further method for deploying and/or retracting a display unit is disclosed in the present document. In accordance with another aspect, the further method comprises the following steps: moving a sliding unit along at least one first sliding rail in a first moving direction from a predefined retracted position to a third predefined deployed position or in a second moving direction from the third predefined deployed position to the predefined retracted position. The first moving direction is different from the second moving direction. The third predefined deployed position is configured such that the display unit is partially provided outside a housing structure.

The further method enables partial provision of the display unit to a user. This is beneficial for scenarios in which a full deployment of the display unit outside, i.e., in an exterior space of the housing structure is not required, desired, or legally prohibited.

In accordance with another aspect, the moving of the method comprises at least one first acceleration, at least one first velocity, and at least one first deceleration and the moving of the method comprises at least one second acceleration, at least one second velocity, and at least one second deceleration, or the moving of the further method comprises at least one acceleration movement, at least one movement at a constant velocity, and at least one deceleration movement.

Setting different acceleration values, velocity values, and/or deceleration values enable determining a plurality of moving profiles of the display unit. The moving profiles may be adjusted to different applications, scenarios, and user requirements. The different acceleration values, velocity values, and/or deceleration values may also be selected to reduce noise, improve durability, or influence the appearance during deployment and/or retraction of the display unit.

A sliding member for sliding along a first sliding rail is disclosed in the present document. In accordance with another aspect, the sliding member comprises a sliding body element comprising a first end portion, a central portion, and a second end portion. The first end portion is connected to the central portion and at least one first recess is provided between the first end portion and the central portion. The central portion is connected to the second end portion, and at least one second recess is provided between the central portion and the second end portion. The central portion comprises a coupling portion.

The sliding member according to the other aspect enables a smooth movement along the first sliding rail while supporting additional weight of connected components. In another aspect, the sliding member enables a smooth movement along a second sliding rail while supporting the additional weight of connected components. The sliding member is able to receive the additional weight and, at the same time, to deform into a preferred shape. The preferred shape contributes to low friction and improved sliding behavior during moving.

The term "sliding body element" refers to a component which is at least partially in contact with another component. The sliding body element comprises a specific shape, moves along a path on/at the other component, and is subject to sliding friction.

The term "recess" refers to a hollowed-out or indented area.

In accordance with another aspect, the first end portion comprises a first sliding block, the central portion comprises a central sliding block, and the second end portion comprises a second sliding block. The first sliding block has a first sliding surface, the central sliding block has a central sliding surface, and the second sliding block has a second sliding surface.

Using the first sliding block having the first sliding surface, the central sliding block having the central sliding surface, and the second sliding block having the second sliding surface further improves the smooth movement of the sliding member.

The terms "first sliding block", "central sliding block", and "second sliding block" refer to a part of the sliding body element which is in contact with another component and is subject to sliding friction.

In accordance with another aspect, the first sliding block has at least one rounded first edge and/or the second sliding block has at least one rounded second edge.

Using the at least one rounded first edge and/or the at least one rounded second edge improves even further the smooth movement of the sliding member.

In accordance with another aspect, the first sliding block comprises at least one third recess different from the at least one first recess and wherein the second sliding block comprises at least one fourth recess different from the at least one second recess, and the central sliding block comprises at least one fifth recess.

Using the at least one third recess, the at least one fourth recess, and the at least one fifth recess contributes even more to deforming into the preferred shape of the sliding member, resulting in lower friction and improved sliding behavior.

In accordance with another aspect, the sliding body element is configured such that the first end portion at least partially bends relative to the central portion and/or that the second end portion at least partially bends relative to the central portion when sliding along a curved portion of the first sliding rail. Preferably, the sliding body element is made of a polymer material. More preferably, the polymer material is one of Igus i3, polytetrafluoroethylene (PTFE), or nylon.

Enabling bending of the first end portion relative to the central portion and/or bending of the second end portion relative to the central portion contributes to an even more improved sliding behavior, especially when sliding along curved portions. The polymer material of the sliding body element enables reducing sliding friction and deforming into the preferred shape. One of Igus i3, polytetrafluoroethylene (PTFE), or nylon enables reducing the sliding friction even more and is especially suitable for achieving the preferred shape while sliding.

A vehicle is disclosed in the present document. In accordance with another aspect, the vehicle comprises at least one positioning mechanism according to any one of the preceding aspects, wherein the at least one positioning mechanism is arranged inside the vehicle to provide a display unit.

The term "vehicle" refers to a mechanical and/or powered means of transportation designed to carry people and/or goods. The term "vehicle" refers in the present document preferably to cars, even more preferably to high-performance cars. Other vehicles, however, such as, but not limited to, utility vehicles, aircrafts, or watercrafts may also be associated with the term "vehicle".

Advantageous aspects of the present disclosure are the subject-matter of the dependent claims. Any and all combinations of at least two features disclosed in the description, the claims, and/or the figures fall within the scope of the present disclosure. Naturally, the explanations given in connection with the positioning mechanism equivalently relate to the method and/or the further method and/or the sliding member and/or the vehicle according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features and/or aspects that are described above or below with respect to the exemplary aspects and/or aspects. In this case, a person skilled in the art will also add individual aspects as improvements or supplementations to the respective basic form of the invention.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

### BRIEF DESCRIPTION OF THE FIGURES

FIG. 1A shows a schematic side view of a positioning mechanism in a retracted position according to a first aspect.
FIG. 1B shows a cross-sectional side view of the positioning mechanism in a deployed position according to the first aspect.
FIG. 2 shows a side view of a belt drive assembly according to the first aspect.
FIG. 3A shows a rearview of a sliding unit according to the first aspect.
FIG. 3B shows a side view of the sliding unit according to the first aspect.
FIG. 4 shows a side view of the positioning mechanism in the retracted position according to the first aspect.
FIG. 5A shows a block diagram according to another aspect.
FIG. 5B shows a block diagram according to another aspect.
FIG. 6A shows a perspective view of a sliding member according to the first aspect.
FIG. 6B shows a cross-sectional view of the sliding member of the positioning mechanism according to the first aspect.

### DETAILED DESCRIPTION OF THE INVENTION

The invention will now be described based on the figures. It will be understood that the aspects of the invention described herein are only examples and do not limit the protective scope of the claims in any way. The invention is defined by the claims and their equivalents. It will be understood that features of one aspect of the invention can be combined with a feature of a different aspect or aspects of the invention.

Unless indicated to the contrary, elements that are the same or functionally the same have been given the same reference signs in the figures. It should also be noted that the illustrations in the figures are not necessarily true to scale.

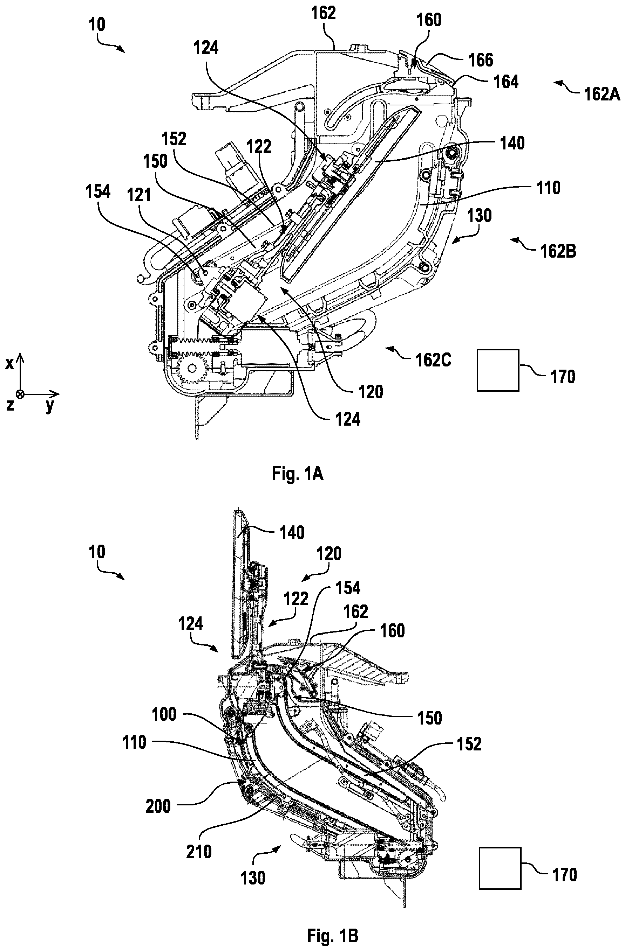

FIG. 1A shows a schematic side view of a positioning mechanism 10 in a retracted position according to a first aspect. The positioning mechanism 10 according to the first aspect comprises two first sliding members 100 (not visible in FIG. 1A), two first sliding rails 110 (only one first sliding rail 110 is visible in FIG. 1A), a sliding unit 120 having four support axles 121 (only one support axle 121 is visible in FIG. 1A), a support structure 122, a display unit 140 and a display rotation mechanism 124, a belt drive assembly 130, an assist mechanism 150 having two second sliding members 154 (only one second sliding member 154 is visible in FIG. 1A) and two second sliding rails 152 (only one second sliding rail 152 is visible in FIG. 1A), a lid positioning mechanism 160, and a controller 170.

The positioning mechanism 10 can be implemented, for example, in a vehicle such as a car. The car may be a regular car or a high-performance car. The implementation of the positioning mechanism 10 is, however, not limited to cars. The positioning mechanism 10 may also be used in other types of vehicles such as, but not limited to, utility vehicles (e.g., trucks, pallet carriers, tractors, excavator), aircrafts (e.g., commercial airplanes, business jets, transport aircrafts), or boats (e.g., tour boats, yachts, sail boats). It will be noted that the vehicle may comprise at least one positioning mechanism 10, wherein the at least one positioning mechanism 10 is arranged inside the vehicle to provide the display unit 140.

The positioning mechanism 10 comprises further a housing structure 162. The housing structure 162 surrounds a housing volume, i.e., an interior space. The housing volume of the housing structure 162 comprises a top volume portion 162A, a middle volume portion 162B, and a bottom volume portion 162C. In FIG. 1A, the top volume portion 162A is in an upper right corner, the bottom volume portion 162C in a lower left corner, and the middle volume portion 162B connects the top volume portion 162A with the bottom volume portion 162C in a slanted and slightly curved manner. It is noted that the housing structure 162 may exhibit any shape or volume body, respectively, suitable for implementing the positioning mechanism 10 according to the first aspect.

The housing structure 162 supports and accommodates, for example, the sliding unit 120 having the display unit 140, and the belt drive assembly 130. The display unit 140 is arranged inside the housing structure 162 in an inclined arrangement and oriented in a portrait mode. The portrait mode refers to a state in which the short side of the display unit 140 is arranged horizontally and the long side of the display unit 140 is arranged vertically. The display unit 140 essentially extents from the top volume portion 162A to the middle volume portion 162C in the retracted position, while a major part of the sliding unit 120 is located close to/in the bottom volume portion 162C of the housing structure 162.

The housing structure 162 also provides support for further components which are attached to an outside of the housing structure 162. The further components comprise, for example, the two first sliding rails 110, the two second sliding rails 152, and the lid positioning mechanism 160. The housing structure 162 may be made of a polymer material, a light metal, a light metal alloy, or a metal alloy.

It is understood that the housing structure 162 may support and/or accommodate yet further components such as, but not limited to, electric wires, connectors, energy storages, as well as mounting members for connecting the housing structure 162 to at least a part of the vehicle.

It is further understood that the housing structure 162 may provide housing walls shielding the accommodated components from external and/or environmental influences such as dirt, water, heat, or the like. The housing walls may also be used to reduce noise. The housing walls may also comprise additional materials such as rubber to further reduce a noise level.

The housing structure 162 has an opening 164. The opening 164 is provided at an upper side of the housing structure 162. The opening 164 connects the housing volume with an exterior space. The exterior space may be, for example, the vehicle interior. The display unit 140 thus moves from the retracted position located in the housing structure 162 through the opening 164 to the exterior space, i.e., in/into a deployed position. The opening 164 is closed by a lid 166 via the lid positioning mechanism 160. FIG. 1A shows the lid 166 in a closing position.

A movement of the sliding unit 120 and the display unit 140, respectively, is achieved by applying a driving force to the sliding unit 120 such that the sliding unit 120 moves along the two first sliding rails 110 and the second sliding rails 152. The driving force is applied via the belt drive assembly 130 which will be described later in more detail.

The two first sliding rails 110 are arranged in an opposing manner (not visible in the figures). The two first sliding rails 110 are symmetrical with respect to a center plane of the housing structure 162 (with respect to a xy plane).

The two first sliding rails 110 exhibit a first shape which determines a first sliding path. Each of the two first sliding rails 110 have a first straight portion. One end of the first straight portion is located close to the bottom volume portion 162C while another end of the first straight portion is located above towards the middle volume portion 162B. The first straight portion extends in FIG. 1A from bottom left upwards under a first predetermined angle of inclination and a first predetermined length. The other end of the first straight portion transitions into a first curved portion. The first curved portion has a first predetermined curvature and a fist predetermined arc length. The first curved portion subsequently transitions into a second straight portion under a second predetermined angle of inclination and a second predetermined length. The second straight portion is essentially arranged vertically, as can be seen in FIG. 1A. The one end of the first straight portion and the uppermost end of the second straight portion determine a sliding trajectory of the two first sliding rails 110 along which the first sliding member 100 is able to move.

The arrangement and the dimensions of the first straight portion, the first curved portion, and the second straight portion determine the retracted position, the deployed position, as well as the motion from the retracted position into the deployed position and vice versa.

It is noted that the arrangement and the dimensions of the first straight portion, the first curved portion, and the second straight portion may be varied to achieve a different sliding trajectory. It is also noted that the first straight portion, the first curved portion, and the second straight portion may be subdivided into further straight and/or curved portions and/or may be arranged in a different order.

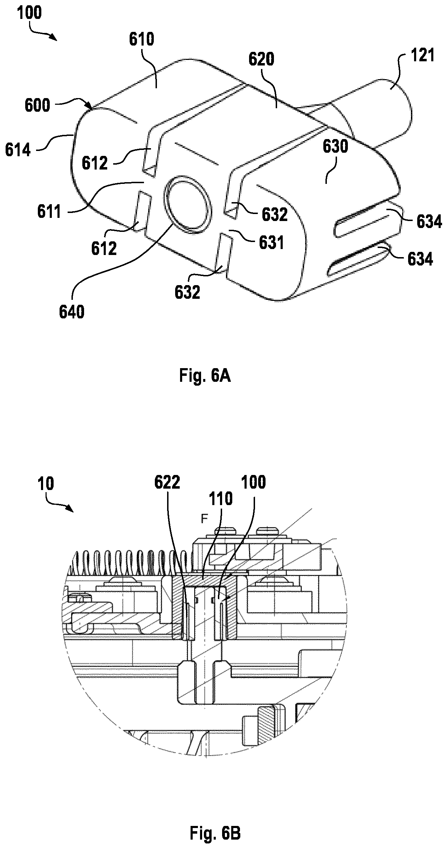

Each of the two first sliding rails 110 have a cross-section in the form of a C-shape, see FIG. 6B. Each of the two first sliding rails 110 supports and accommodates one of the two first sliding members 100. Each one of the two first sliding members 100 is pivotably connected to a support axle 121. The support axle 121 is fixedly connected to the support structure 122 of the sliding unit 120.

The housing structure 162 provides holes and slots, respectively, to spatially connect the housing volume with an inner space of the two first sliding rails 110 having the C-shaped cross-section. The two first sliding rails 110 are attached on/at the inside of the housing structure 162. In other alternatives, the two first sliding rails 110 may be attached on/at the outside of the housing structure 162.

It will be noted that the two first sliding rails 110 may be fixedly attached to the housing structure 162 via fixation means such as, but not limited to, screws or rivets, welding, or adhesives. It will be further noted that the two first sliding rails 110 may be integrally provided with the housing structure 162, for example, by forming the two first sliding rails 110 integrally on the housing structure 162 as molded plastic or by machining aluminum.

As already mentioned above, the assist mechanism 150 comprises two of the at least one second sliding rail 152. The two second sliding rails 152 are also arranged in an opposing manner (not visible in the figures) and symmetrical with respect to the center plane of the housing structure 162 (with respect to the xy plane). The aspects of the two first sliding rails 110 such as arrangement, design, shape, and dimensions, as described above, also apply in a similar manner to the two second sliding rails 152 and will not be repeated for the sake of brevity.

It will be noted that the two first sliding rails 110 exhibit the first shape, as mentioned above, and the two second sliding rails 152 exhibit a second shape. The second shape may be different from the first shape. The difference in first shape of two first sliding rails 110 and the second shape of the two second sliding rails 152 is to enable tilting of the display unit 140 during its movement from bottom to top or top to bottom. Thereby, the shape of the two first sliding rails 110 define a trajectory of said motion.

In the first aspect, the two second sliding rails 152 are arranged with a vertical and/or horizontal offset such that the two second sliding rails 152 are arranged above the two first sliding rails 110 with an additional offset towards the outside of the housing. The vertical offset may be around 35 mm. The vertical and/or horizontal offset may change depending on a difference in shape of the two second sliding rails 152 compared to the two first sliding rails 110. The vertical and/or horizontal offset may vary between 20-40 mm._The horizontal offset may be optional.

FIG. 1B shows a cross-sectional side view of the positioning mechanism 10 in the deployed position according to the first aspect. In the deployed position, the lid 166 is in an accommodated position, i.e., the lid 166 is retracted into the housing structure 162 via the lid positioning mechanism 160. As can be seen in FIG. 1B, the sliding unit 120 is located in the uppermost position and the display unit 140 is fully provided outside the housing structure 162. It will be noted that the sliding unit may also be located such that the display unit 140 is only partially provided outside the housing structure 162. FIG. 1B also shows the belt drive assembly 130 comprising the drive belt 210 for driving the sliding unit 120.

The positioning mechanism 10 according to the first aspect is provided with the controller 170. The controller 170 is configured to control the belt drive assembly 130 and the display rotation mechanism 124. It will be noted that also a first controller may be provided to control the belt drive assembly 130 and a second controller may be provided to control the display rotation mechanism 124. The controller 170 may be provided externally, i.e., spaced apart from the housing structure 162, for example, somewhere else in the vehicle. The controller 170 may also be integrated into the housing structure 162. The controller 170 may also be connected to other electronic devices and/or processors in the vehicle. The controller 170 may be a processing unit such as, but not limited to, a programmable logic controller (PLC). The processing unit may comprise a storage unit. The storage unit may, for example, store predetermined moving profiles corresponding to predetermined driving forces provided by the belt drive assembly 130. The moving profiles may comprise a plurality of acceleration values, velocity values, and deceleration values along the first sliding path. The use of the controller 170 enables automatic control of the belt drive assembly 130 and, consequently, of the sliding unit 120 resulting in the desired positions of the display unit 140.

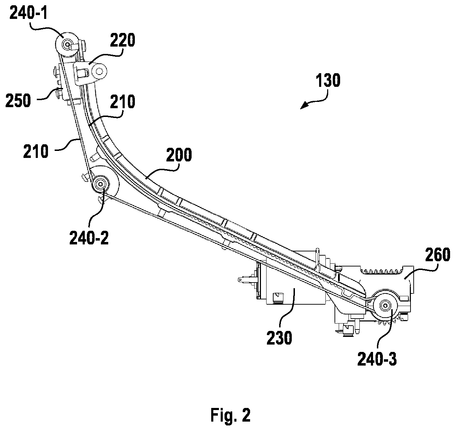

FIG. 2 shows a side view of the belt drive assembly 130 according to the first aspect. The belt drive assembly 130 comprises a belt guiding structure 200, the drive belt 210, a first pulley 240-1, a second pulley 240-2, and a third pulley 240-3. The belt drive assembly 130 is arranged below the two first sliding rails 110. As can be seen, for example, in FIG. 1B, the belt guiding structure 200 is arranged with a vertical and horizontal offset to the two first sliding rails 110. The vertical offset may be 5-20 mm. More specifically, the vertical offset may be around 10 mm. The horizontal offset may be optional

The belt guiding structure 200 has a guiding surface along which the drive belt 210 is moving. The guiding surface may be curved. The guiding surface may be preferred as a trajectory of the belt drive, and the trajectory may preferably be curved. The drive belt 210 contacts the guiding surface. The guiding surface exhibits a shape based on the first shape of the two first sliding rails 110. Due to the offset of the guiding structure 200 to the two first sliding rails 110, the guiding surface and the drive belt 210, respectively, are arranged with a constant distance to a sliding surface of the two first sliding rails 110. A moving path of the drive belt 210 along the guiding surface may be referred to as a predefined driving trajectory.

The first pulley 240-1 is arranged close to an upper end of the belt guiding structure 200. The third pulley 240-3 is arranged close to a lower end of the belt guiding structure 200. The second pulley 240-2 is approximately in a center position between the first pulley 240-1 and the third pulley 240-3 with respect to a vertical direction. Further, the second pulley 240-2 is located below and space apart the guiding surface. The drive belt 210 is a loop guided around the first pulley 240-1, the second pulley 240-2, and the third pulley 240-3 resulting in a predetermined belt trajectory. The predetermined belt trajectory is arranged in a room below the guiding surface. The described arrangement allows the drive belt 210 to be continuously held in contact with the guiding surface while driving the sliding unit 120.

The belt drive assembly 130 further comprises a first motor 230 and a first gear box 260. The first motor 230 and the first gear box 260 are located at the lower end of the belt guiding structure 200 corresponding to the bottom volume portion 162C of the housing structure 162. The first motor 230 may be an electric motor for providing mechanical power. The mechanical power is transmitted via the first gear box 260 and the third pulley 240-3 to the drive belt 210. The first gear box 260 may be a worm gear transmission.

The belt drive assembly 130 further comprises a clamp member 220 which is depicted in FIG. 2 at the upper end of the belt guiding structure 200 corresponding to the deployed position. One end portion of the clamp member 220 is connected to the drive belt 210. Another end portion of the clamp member 220 is connected to the support axle 121 of the sliding unit 120. The clamp member 220 is movably arranged at the belt guiding structure 200.

The belt drive assembly 130 further comprises a tension adjustment unit 250. The tension adjustment unit 250 is arranged at the upper end of the belt guiding structure 200. The tension adjustment unit 250 enables adjusting the tension of the drive belt 210. Adjusting belt tension may be required due to elongation of the drive belt 210 over time or deviations in the entire assembly resulting in a backlash. It is noted that the tension adjustment unit 250 may also be omitted.

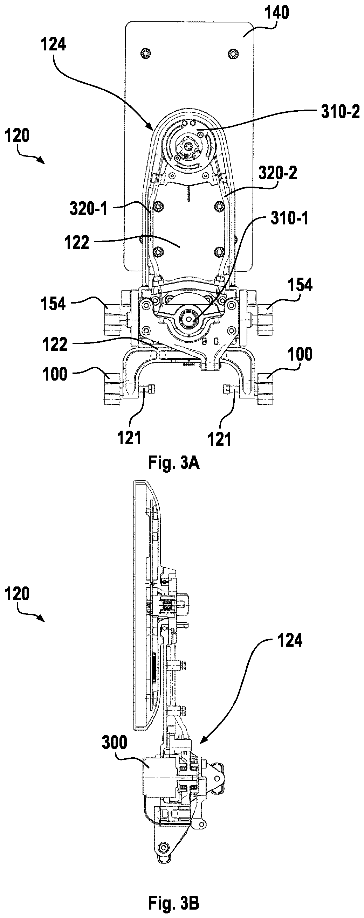

FIG. 3A shows a rearview of the sliding unit 120 according to the first aspect. FIG. 3B shows a side view of the sliding unit 120 according to the first aspect. FIG. 3A shows the display unit 140 in the portrait mode attached to the support structure 122. The display unit 140 is pivotably attached to the support structure 122 via the display rotation mechanism 124.

The display rotation mechanism 124 comprises a second motor 300 (not visible in FIG. 3A), a second gear box, a first wheel 310-1, a second wheel 310-2, a first cable 320-1, and a second cable 320-2. The second motor 300 may be a DC motor. The second gear box may be a planetary gear. The display rotation mechanism 124 enables rotation/pivoting of the display unit 140, for example, but not limited to, for 90 degrees. The pivoting may be a change from the portrait mode of the display unit 140 to a landscape mode and vice versa. It is noted that the display rotation mechanism 124 may be adapted to pivot the display unit 140 to any desired pivot angle. The second gear box may further comprise a locking mechanism to lock a reached orientation of the display unit 140 after pivoting to avoid backlash and/or wobbling. A transfer of rotation from the first wheel 310-1 to the second wheel 310-2 may be achieved using a 1 to 1 ratio between the first wheel 310-1 and the second wheel 310-2. The first cable 320-1 and the second cable 320-2 may comprise rigid stainless steel flexible cables.

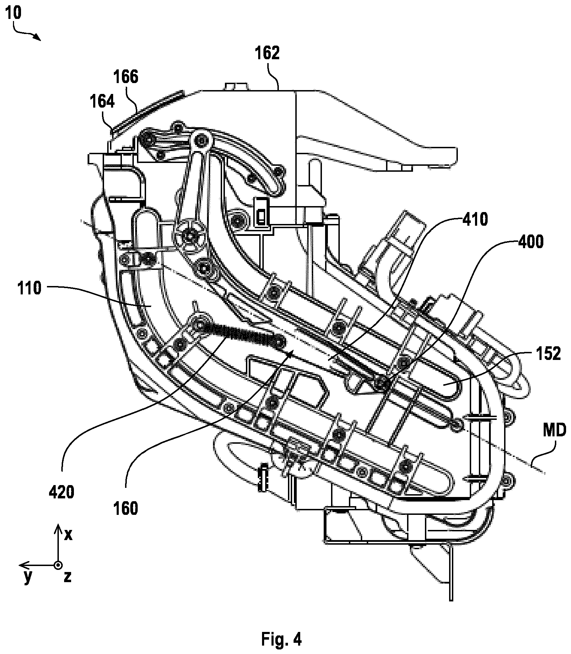

FIG. 4 shows a side view of the positioning mechanism 10 in the retracted position according to the first aspect. The positioning mechanism 10 further comprises the lid positioning mechanism 160. To synchronize closing and opening of the lid with the movement of the sliding unit 120, a mechanical assembly is provided at/on the outside of the housing structure 162.

The mechanical assembly according to the first aspect comprises an actuation pin 400, two articulated arm units 410 and two spring elements 420. Preferably, the actuation pin 400 is provided on both sides of the housing structure 162. Most preferably, such two of the actuation pins 400 may be moved simultaneously by the sliding unit 120 while moving up and/or down. The actuation pin 400 may be formed as a single piece, i.e., extending from a first articulated arm unit 410 to a second articulated arm unit 410. The actuation pin 400 may also be formed as two separate pieces The mechanical assembly has a symmetrical construction with respect to the center plane of the housing structure 162 (with respect to the xy plane). In FIG. 4, the first articulated arm unit 410 is shown arranged between the first sliding rail 110 and the second sliding rail 152. One end of the first articulated arm unit 410 is connected with the lid 166. Another end of the first articulated arm unit 410 is connected to the actuation pin 400. The first articulated arm unit 410 or the second articulated arm unit 410 may also comprise two arm elements connected to each other, for example, via an articulated connection such that one of the two arm elements is connected with the lid 166 and the other one of the two arm elements is connected to the actuation pin 400. Of course, the first articulated arm unit 410 can have more than one linkage/arm elements. The actuation pin 400 moves in a slot along a moving direction MD. The slot connects the housing volume with the exterior space. The actuation pin 400 extends from the first articulated arm unit 410 into the housing volume and to the second articulated arm unit 410. The actuation pin 400 is connected to the second articulated arm unit 410 which is provided at an opposing side of the housing structure 162 (not shown in FIG. 4). The sliding unit 120 is configured to receive the actuation pin 400 when moving into the retracted position. Preferably, the sliding unit 120 comprises a hook-shaped portion on either side which may engage with the at least one actuation pin 400 on either side while moving down. While moving up, the hook-shaped portion may be disengaged from the at least one actuation pin 400. The sliding unit 120 pushes the actuation pin 400 and the first articulated arm unit 410, respectively, along the moving direction MD. This results in a closing movement and finally in the closing position of the lid 166.

As shown in FIG. 4, the first spring element 420 is attached on one end to the housing structure 162 and on another end to the first articulated arm unit 410. By pushing the actuation pin 400 along the moving direction MD, as described above, the first spring element 410 provides a biasing force in an opposite direction. In other words, when the sliding unit 120 is moved from the retracted position into the deployed position and therefore release the actuation pin 400, the biasing force causes the first articulated arm unit 410 to move in a direction similar to the sliding unit 120 resulting in an opening movement of the lid 166 and finally in the accommodated position allowing the display unit 140 to move through the opening 164 into the exterior space.

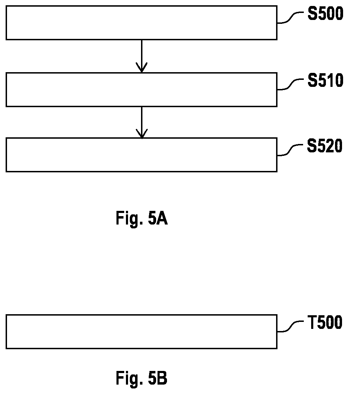

FIG. 5A shows a block diagram according to another aspect. The block diagram in FIG. 5A depicts a method S for deploying and/or retracting a display unit 140. The method S comprises in a first step S500 moving a sliding unit 120 along at least one first sliding rail 110 in a first moving direction from a predefined retracted position or a first predefined deployed position to a second predefined deployed position, in a second step S510 pivoting the display unit 140 from a non-pivoted orientation to a pivoted orientation or from the pivoted orientation to the non-pivoted orientation, and in a third step S520 moving the sliding unit 120 along the at least one first sliding rail 110 in a second moving direction from the second predefined deployed position to the first predefined deployed position or the predefined retracted position, wherein the first predefined deployed position is different from the second predefined deployed position, and wherein the first moving direction is different from the second moving direction, and wherein the pivoting S510 of the display unit 140 is non-sequential to the moving S500 and/or the moving S520 of the sliding unit 120.

In one example, the predefined retracted position corresponds to a state in which the sliding unit 120 and the display unit 140 are located inside a housing structure 162. During the predefined retracted position, the display unit 140 is in the non-pivoted orientation (portrait mode). In the one example, the sliding unit 120 is then moved in the first moving direction to the second predefined deployed position. Once the display unit 140 is located outside the housing structure 162, pivoting may be initiated such that the display unit 140 rotates to the pivoted orientation (landscape mode). The second predefined deployed position is determined by the required travel distance of the sliding unit 120 in the first moving direction, such that collision between the display unit 140 and the housing structure 162 is avoided during the pivoting. The sliding unit 120 is then also moved in the second moving direction to the first predefined deployed position which enables the provision of the display unit 140 in the desired viewing position which is, for example, perceived as (most) comfortable by the user. In the one example, moving the sliding unit 120 along the first moving direction and pivoting the display unit 140 is performed simultaneously, i.e., in a non-sequential manner. In the one example, the pivoting of the display unit 140 and moving the sliding unit 120 along the second moving direction into the desired viewing position may also be performed simultaneously, i.e., in a non-sequential manner. It will be noted that the non-sequential motions as explained above may also be applied for the case that the sliding unit 120 and the display unit 140 are moved from the first predefined deployed position, i.e., the desired viewing position (landscape mode) via the second predefined deployed position back into the housing structure 162 to the predefined retracted position.

The method S hence reduces the necessary amount of time to deploy or retract the display unit due to the non-sequential manner. "Non-sequential" refers to deploying or retracting or pivoting in a manner that does not occur in a specific order or follows a logical progression or is executed in a predetermined order. In other words, different types of motion applied to the display unit may overlap, for example, but not limited to, pivoting the display unit while moving the sliding unit. Pivoting the display unit while moving the sliding unit also creates an aesthetic effect appreciated by the user.

The method S also enables an overhead lift distance to provide sufficient space for pivoting the display unit 140. The overhead lift distance is especially useful for large screens.

It will be noted that the method S may be performed with the positioning mechanism 10 as described with respect to the FIGS. 1A to 4. It will be further noted that the method S may be performed with a different positioning mechanism. The different positioning mechanism may, for example, comprise only one second sliding rail 152.

FIG. 5B shows a block diagram according to another aspect. The block diagram in FIG. 5B depicts a further method T for deploying and/or retracting a display unit 140. The further method T comprises in first step T500 moving a sliding unit 120 along at least one first sliding rail 110 in a first moving direction from a predefined retracted position to a third predefined deployed position or in a second moving direction from the third predefined deployed position to the predefined retracted position, wherein the first moving direction is different from the second moving direction, and wherein the third predefined deployed position is configured such that the display unit 140 is partially provided outside a housing structure 162. The described motion may be preferred during a reversing of the vehicle (i.e. when the driver puts a reverse gear). Thereby, the partial deployment of the display unit 140 may speed up a time needed for a camera feed to be visible by the driver. This may help with achieving predefined homologation requirements.

It will be noted that the further method T may be performed with the positioning mechanism 10 as described with respect to the FIGS. 1A to 4. It will be further noted that the further method T may be performed with a different positioning mechanism. The different positioning mechanism may, for example, comprise only one second sliding rail 152.

The first step S500 comprises at least one first acceleration, at least one first velocity, and at least one first deceleration. The second step S520 comprises at least one second acceleration, at least one second velocity, and at least one second deceleration. The first step T500 comprises at least one acceleration movement, at least one movement at a constant velocity, and at least one deceleration movement.

FIG. 6A shows a perspective view of a sliding member 100 according to the first aspect. The sliding member 100 may correspond to the first sliding member 100 and/or the second sliding member 152 as already previously mentioned. The sliding member 100 may be used to slide along a first sliding rail 110 or a second sliding rail 152.

As shown in FIG. 6A, the sliding member 100 comprises a sliding body element 600 having a cuboid shape and including a first end portion 610, a central portion 620, and a second end portion 630.

The first end portion 610 is connected to the central portion 620 via a first bridge portion 611. Two first recesses 612 are provided between the first end portion 610 and the central portion 620. One of the two first recesses 612 is provided above the first bridge portion 611 with an opening to a top side of the sliding body element 600, the other one of the two first recesses 612 is provided below with an opening to a bottom side of the sliding body element 600 while the first bridge portion 611 is centrally arranged. The two first recesses 612 are relatively narrow and extend from a front side of the sliding body element 600 to a back side of the sliding body element 600. The two first recesses 612 essentially form narrow slits. The two first recesses 612 taper towards the back side.

The central portion 620 is connected to the second end portion 630 via a second bridge portion 631. Two second recesses 632 are provided between the central portion 620 and the second end portion 630. One of the two second recesses 632 is provided above the second bridge portion 631 with an opening to the top side, the other one of the two second recesses 632 is provided below with an opening to the bottom side while the second bridge portion 631 is centrally arranged. The two second recesses 632 are relatively narrow and extend from the front side to the back side. The two second recesses 632 essentially form narrow slits. The two second recesses 632 taper towards the back side.

The central portion 620 comprises a coupling portion 640. The coupling portion 640 couples the sliding member 100 via the support axle 121 to the sliding unit 120. The first end portion 610 comprises a first sliding block, the central portion 620 comprises a central sliding block, and the second end portion 630 comprises a second sliding block, wherein the first sliding block has a first sliding surface, the central sliding block has a central sliding surface, and the second sliding block has a second sliding surface. The first sliding block has two rounded first edges and the second sliding block has two rounded second edges. The two rounded first edges and the two rounded second edges relate to the outer edges of the sliding body element in a sliding direction. Thereby, an easy and smooth navigation through the curved part of the sliding rail is provided.

The first sliding block further comprises two third recesses 614 (not visible in FIG. 6A) different from the two first recesses 612. The second sliding block further comprises two fourth recesses 634 different from the two second recesses 632. The central sliding block comprises two fifth recesses 622, as can be seen in FIG. 6B. The two third recesses 614 extend from the back side into the first sliding block. The two third recesses 614 do not provide a connection to the front side, the top side, or the bottom side. The two fourth recesses 634 extend from the back side into the second sliding block. The two fourth recesses 634 do not provide a connection to the front side, the top side, or the bottom side. The two fifth recesses 622 extend from the back side into the central sliding block. The two fifth recesses 622 do not provide a connection to the front side, the top side, or the bottom side.

In another aspect, the sliding body element 600 is configured such that the first end portion 610 may at least partially bend relative to the central portion 620 and/or that the second end portion 630 may at least partially bend relative to the central portion 620 when sliding along a curved portion of the first sliding rail 110. The sliding body element 600 thus enables bending of the first end portion 610 relative to the central portion 620 and/or bending of the second end portion 630 relative to the central portion 620. The sliding body element 600 may be made of a polymer material. The polymer material may be one of Igus i3, polytetrafluoroethylene (PTFE), or nylon.

The two first recesses 612, the two second recesses 632, the two third recesses 614, the two fourth recesses 634, and the two fifth recesses 622 influence the resulting deformation of the sliding body element 600 upon load introduced via the coupling portion 640. The dimensions of the tapers of the two first recesses 612, the two second recesses 632, the two third recesses 614, the two fourth recesses 634, and the two fifth recesses 622 also influences the resulting deformation of the sliding body element 600 upon load. The two first recesses 612 and the two second recesses 632 in particular may enable a higher flexibility regarding bending. The two third recesses 614, the two fourth recesses 634, and the two fifth recesses 622 in particular may enable a higher flexibility regarding maintaining a required side preload to prevent free play. Designing the tapers of the described recesses enables adapting to a predetermined load resulting in a preferred deformed shape of the sliding member 100 and providing better overall sliding properties for straight portions and/or curved portions along, for example, the first sliding rail 110 and/or the second sliding rail 152.

FIG. 6B shows a cross-sectional view of the sliding member 100 of the positioning mechanism 10 according to the first aspect. As shown in FIG. 6B, the sliding member 100 is accommodated in the first sliding rail 110 having a C-shaped cross-section.

### LIST OF REFERENCE SIGNS

- 10: positioning mechanism
- 100: first sliding member
- 110: first sliding rail
- 120: sliding unit
- 121: support axle
- 122: support structure
- 124: display rotation mechanism
- 130: belt drive assembly
- 140: display unit
- 150: assist mechanism
- 152: second sliding rail
- 154: second sliding member
- 160: lid positioning mechanism
- 162: housing structure
- 162A: top volume portion
- 162B: middle volume portion
- 162C: bottom volume portion
- 164: opening
- 166: lid
- 170: controller
- 200: belt guiding structure
- 210: drive belt
- 220: clamp member
- 230: first motor
- 240-1, 240-2, 240-3: pulley
- 250: tension adjustment unit
- 260: first gear box
- 300: second motor
- 310-1, 310-2: wheel
- 320-1, 320-2: cable
- 400: actuation pin
- 410: articulated arm unit
- 420: spring element
- 600: sliding body element
- 610: first end portion
- 611: first bridge portion
- 612: first recess
- 614: third recess
- 620: central portion
- 622: fifth recess
- 630: second end portion
- 631: second bridge portion
- 632: second recess
- 634: fourth recess
- 640: coupling portion
- MD: moving direction

- S: method
- S500: method step of "moving"
- S510: method step of "pivoting"
- S520: method step of "moving"
- T: method
- T500: method step of "moving"

## Claims

1. A positioning mechanism (10) for deploying and/or retracting a display unit (140), the positioning mechanism (10) comprising:
at least one first sliding member (100);
at least one first sliding rail (110) being at least partially curved and configured to support the at least one first sliding member (100);
a sliding unit (120) configured to be connected to the at least one first sliding member (100) for moving along the at least one first sliding rail (110), wherein the sliding unit (120) comprises the display unit (140);
an assist mechanism (150) for guiding and/or stabilizing the sliding unit (120); and
a belt drive assembly (130) configured to provide a drive belt (210) for driving the sliding unit (120),
wherein the drive belt (210) is arranged along a predefined driving trajectory, and
wherein the predefined driving trajectory is at least partially determined by the at least one first sliding rail (110).

2. The positioning mechanism (10) according to claim 1, wherein the at least one first sliding rail (110) has at least one curved portion configured such that the sliding unit (120) is moved at least partly non-linearly,
wherein the predefined driving trajectory corresponds at least partially to the at least one curved portion,
preferably the predefined driving trajectory corresponds at least partially to a sliding surface of the at least one first sliding rail (110) provided at the at least one curved portion.

3. The positioning mechanism (10) according to claim 1 or 2, wherein the at least one first sliding rail (110) further has at least one straight portion configured such that the sliding unit (120) is moved at least partly linearly along the at least one first sliding rail (110).

4. The positioning mechanism (10) according to any one of the preceding claims, wherein the belt drive assembly (130) further comprises:
a belt guiding structure (200) configured to guide the drive belt (210) at least partially along the predefined driving trajectory,
preferably the belt guiding structure (200) provides a guiding surface to guide the drive belt (210) and/or has an offset to the at least one first sliding rail (110).

5. The positioning mechanism (10) according to claim 4, wherein the belt drive assembly (130) further comprises at least one of:
at least one clamp member (220) configured to be movably arranged at the belt guiding structure (200) and to be connected to the drive belt (210) and the sliding unit (120); and
at least one of a first motor (230), a first gear box (260), and at least one pulley (240-1; 240-2; 240-3),
preferably the first gear box (260) comprises a worm gear transmission, and
more preferably the belt drive assembly (130) further comprises a tension adjustment unit (250).

6. The positioning mechanism (10) according to any one of the preceding claims, wherein the at least one first sliding rail (110) has a rail cross-section configured to at least partially accommodate the at least one first sliding member (100), preferably the cross-section exhibiting a C-shape.

7. The positioning mechanism (10) according to any one of the preceding claims, wherein the positioning mechanism (10) comprises two of the at least one first sliding rail (110), preferably being provided in an opposing manner on the positioning mechanism (10).

8. The positioning mechanism (10) according to any one of the preceding claims, wherein the sliding unit (120) comprises a support structure (122), wherein the display unit (140) is rigidly and/or pivotably attached to the support structure (122).

9. The positioning mechanism (10) according to any one of the preceding claims, wherein the support structure (122) is configured to provide a display rotation mechanism (124) for pivoting the display unit (140),
preferably, the display rotation mechanism (124) comprises at least one of a second motor (300), a second gear box, at least one wheel (310-1; 310-2), and at least one cable (320-1; 320-2),
more preferably, the second motor (300) is a DC motor and/or the second gear box comprises a planetary gear.

10. The positioning mechanism (10) according to any one of the preceding claims, the positioning mechanism (10) further comprising:
a housing structure (162) for supporting and/or accommodating the sliding unit (120);
an opening (164) provided at the housing structure (162) and configured such that the sliding unit (120) at least partially moves through the opening (164);
a lid (166) configured to at least partially cover the opening (164); and
a lid positioning mechanism (160) configured to move the lid (166).

11. The positioning mechanism (10) according to claim 10, wherein the lid positioning mechanism (160) is mechanically synchronized with the sliding unit (120) via a mechanical assembly,
wherein the mechanical assembly preferably comprises an actuation pin (400), at least one articulated arm unit (410), and at least one spring element (420).

12. The positioning mechanism (10) according to any one of the preceding claims, wherein the at least one first sliding rail (110) and the assist mechanism (150) are configured to provide the sliding unit (120) in a predefined retracted position and/or in a predefined deployed position, and wherein the assist mechanism (150) comprises at least one second sliding rail (152) being at least partially curved and configured to support at least one second sliding member (154) connected to the sliding unit (120),
wherein the at least one second sliding rail (152) has an offset to the at least one first sliding rail (110),
preferably, the at least one second sliding rail (152) is shaped and/or guided different from the at least one first sliding rail (110).

13. A method (S) for deploying and/or retracting a display unit (140), the method comprising the following steps:
moving (S500) a sliding unit (120) along at least one first sliding rail (110) in a first moving direction from a predefined retracted position or a first predefined deployed position to a second predefined deployed position;
pivoting (S510) the display unit (140) from a non-pivoted orientation to a pivoted orientation or from the pivoted orientation to the non-pivoted orientation;
moving (S520) the sliding unit (120) along the at least one first sliding rail (110) in a second moving direction from the second predefined deployed position to the first predefined deployed position or the predefined retracted position,
wherein the first predefined deployed position is different from the second predefined deployed position,
and wherein the first moving direction is different from the second moving direction,
and wherein the pivoting (S510) of the display unit (140) is non-sequential to the moving (S500) and/or the moving (S520) of the sliding unit (120).

14. A method (T) for deploying and/or retracting a display unit (140), the method comprising the following steps:
moving (T500) a sliding unit (120) along at least one first sliding rail (110) in a first moving direction from a predefined retracted position to a third predefined deployed position or in a second moving direction from the third predefined deployed position to the predefined retracted position,
wherein the first moving direction is different from the second moving direction,
and wherein the third predefined deployed position is configured such that the display unit (140) is partially provided outside a housing structure (162).

15. The method (S) according to claim 13 or the method (T) according to claim 14, wherein the moving (S500) comprises at least one first acceleration, at least one first velocity, and at least one first deceleration and the moving (S520) comprises at least one second acceleration, at least one second velocity, and at least one second deceleration, or the moving (T500) comprises at least one acceleration movement, at least one movement at a constant velocity, and at least one deceleration movement.

16. A sliding member (100) for sliding along a first sliding rail (110), the sliding member (100) comprising:
a sliding body element (600) comprising a first end portion (610), a central portion (620), and a second end portion (630),
wherein the first end portion (610) is connected to the central portion (620) and at least one first recess (612) is provided between the first end portion (610) and the central portion (620),
wherein the central portion (620) is connected to the second end portion (630) and at least one second recess (632) is provided between the central portion (620) and the second end portion (630), and
wherein the central portion (620) comprises a coupling portion (640).

17. The sliding member (100) according to claim 16, wherein the first end portion (610) comprises a first sliding block, the central portion (620) comprises a central sliding block, and the second end portion (630) comprises a second sliding block,
wherein the first sliding block has a first sliding surface, the central sliding block has a central sliding surface, and the second sliding block has a second sliding surface, and
wherein the first sliding block has at least one rounded first edge and/or the second sliding block has at least one rounded second edge.

18. The sliding member (100) according to claim 17, wherein the first sliding block comprises at least one third recess (614) different from the at least one first recess (612) and wherein the second sliding block comprises at least one fourth recess (634) different from the at least one second recess (632), and the central sliding block comprises at least one fifth recess (622).
